# EUROPÄISCHE PATENTANMELDUNG

(11) **EP 0 670 264 A1**
(43) Veröffentlichungstag der Anmeldung: **06.09.1995**
(21) Anmeldenummer: 95101877.9
(22) Anmeldetag: 11.02.1995
(51) Int. Cl.: B64D 37/14

(54) **Treibstoffversorgungssystem**

(30) Priorität: 02.03.1994 RU 94007124
(71) Anmelder: Daimler-Benz Aerospace Aktiengesellschaft, D-81663 München (DE); Tupolev AG, Moskau, 111250 (RU)
(72) Erfinder: Müller, Martin, D-85635 Höhenkirchen-Siegertsbrunn (DE); Grafwallner, Franz, D-83684 Tegernsee (DE); Luger, Peter, Dr., D-85635 Höhenkirchen-Siegertsbrunn (DE); Peller, Helmuth, Dr., D-85635 Höhenkirchen-Siegertsbrunn (DE); Malyshev, Valentin V., Prof., RU-111020 Moskou (RU); Galperin, Sergei B., RU-117588 Moskou (RU); Golov, Igor V., RU-115569 Moskou (RU)
(74) Vertreter: Frick, Gerhard, Dipl.-Ing.

(57) **Zusammenfassung**

Treibstoffversorgungssystem für mehrstrahlige, kryogenen Treibstoff benutzende Flugzeuge mit einem Tank oder einer Tankgruppe (3,5) für jedes Triebwerk (7,8) oder für jeweils alle Triebwerke auf einer Seite der Flugzeuglängsmittelebene sowie ggf. mit einem zusätzlichen gemeinsamen Tank oder einer gemeinsamen Tankgruppe für alle Triebwerke.

Von jedem/jeder, einem bestimmten Triebwerk oder den Triebwerken einer Flugzeugseite zugeordneten Tank/Tankgruppe führt eine Transferleitung mit Absperrventil zu mindestens einem/einer weiteren Tank/Tankgruppe und/oder ggf. zu dem/der allen Triebwerken gemeinsamen Tank/Tankgruppe. Ggf. führt von dem/der gemeinsamen Tank/Tankgruppe mindestens eine Transferleitung zu mindestens einem/einer weiteren Tank/Tankgruppe.

## Beschreibung

Die Erfindung betrifft ein Treibstoffversorgungssystem für mehrstrahlige, kryogenen Treibstoffbenutzende Flugzeuge gemäß dem Oberbegriff des Patentanspruches 1.

Treibstoffversorgungssysteme für mehrstrahlige Flugzeuge sind in zahlreichen Ausführungen bekannt. Der zweistrahlige Airbus A 310 beispielsweise besitzt fünf Tanks und zwar auf jeder Seite einen inneren und einen äußeren Flügeltank sowie einen Mitteltank im Durchtrittsbereich des Tragflügels durch den Rumpf. Die beiden linken Flügeltanks dienen im normalen Flugbetrieb ausschließlich zur Versorgung des linken Triebwerkes, entsprechend verhält es sich mit den rechten Flügeltanks und dem rechten Triebwerk. Aus dem Mitteltank können beide Triebwerke mit Treibstoff (Kerosin) versorgt werden. Ein Treibstofftransfer von Tank zu Tank ist nicht vorgesehen. Damit bei einem Triebwerksausfall der in dessen Flügeltanks befindliche Treibstoff für das verbleibende, intakte Triebwerk genutzt werden kann, gibt es eine Leitungsverbindung zwischen der linken und der rechten Flgzeugseite mit einem im Notfall zu öffnenden Absperrventil. Dieses Ventil wird als Transfer Valve, Cross Feed Valve oder Crossover Valve bzw. als "crossover"-Ventil etc. bezeichnet. Es ermöglicht somit eine direkte Treibstoffzufuhr von den Flügeltanks einer Seite zum Triebwerk auf der anderen Seite des Flugzeugs.

Die Tankanordnung des vierstrahligen Airbus A 340 ist vergleichbar mit derjenigen des A 310, es ist allerdings noch ein zusätzlicher Trimmtank im Höhenleitwerk vorhanden, welcher mit dem Mitteltank verbunden bzw. verbindbar ist. Unterschiede bestehen insofern, als beide Triebwerke einer Seite grundsätzlich aus dem inneren Flügeltank versorgt werden, welcher wiederum mit dem äußeren Flügeltank verbunden bzw. verbindbar ist. Aber auch hier ist das "crossover"-Prinzip verwirklicht, d.h. es besteht eine im Notfall freizugebende Verbindung zwischen den Flügeltanks einer Seite und den Triebwerken auf der anderen Seite des Flugzeugs.

Bei Flugzeugen, welche mit kryogenem Treibstoff fliegen, wird dieser tiefkalt und flüssig in den wärmeisolierten Flugzeugtanks gespeichert. Im normalen Flugbetrieb wird der Treibstoff den Triebwerken als tiefkalte Flüssigkeit zugeführt, wobei das Leitungssystem mit seinen Einbauten etwa die Temperatur des Treibstoffes annimmt.

Problematisch sind demgegenüber Betriebsphasen, in denen das Leitungssystem oder Teile davon sich noch etwa auf Umgebungstemperatur befindet, d.h. relativ "warm'' sind. Dies ist beispielsweise in der Startphase der Triebwerke der Fall und gilt auch während des Flugbetriebs für treibstoffgefüllte, inaktive, d.h. nicht durchströmte Leitungsabschnitte bzw. - elemente. In den warmen Leitungselementen kommt es bei beginnender Durchströmung zu einer intensiven Verdampfung des Treibstoffes mit der Folge starker Druck- und Durchflußschwankungen. Dies wiederum hat einen ungleichmäßigen, unzuverlässigen Triebwerkslauf, im Extremfall sogar ein Aussetzen der Triebwerke zur Folge.

Der gleiche Effekt würde auftreten, wenn infolge eines Triebwerksausfalls bzw. eines Leitungsschadens auf "crossover"-Betrieb umgeschaltet wird. Wenn das auf Umgebungstemperatur befindliche "crossover"-Ventil und die zugehörigen Leitungselemente bei ihrer Inbetriebnahme mit dem flüssigen Treibstoff in Berührung kommen würden, würde auch hier eine intensive Verdampfung erfolgen, so daß teils gasförmiger, teils flüssiger Kraftstoff mit stark schwankendem Druck und in stark variierender Menge zu dem laufenden Triebwerk bzw. zu den laufenden Triebwerken gelangen würde.

Dies hätte zumindest einen sehr unruhigen Triebwerkslauf zur Folge, wobei das intakte Triebwerk bzw. die intakten Triebwerke im ungünstigsten Fall auch noch versagen könnten.

Im Falle einer Beschädigung des "crossover"-Ventils, welche zu einer Leckage führt, wäre auch die Treibstoffversorgung der noch intakten Triebwerke aus ihren eigenen Tanks gefährdet.

Demgegenüber besteht die Aufgabe der Erfindung darin, die genannten Nachteile zu vermeiden und dadurch insbesondere die Betriebssicherheit zu erhöhen.

Diese Aufgabe wird durch die im kennzeichnenden Teil des Anspruches 1 genannten Merkmale gelöst.

Die vorliegende Erfindung verzichtet also im Hinblick auf die Eigenschaften kryogener Treibstoffe auf das "crossover"-Prinzip und schlägt statt dessen einen Treibstofftransfer von Tank zu Tank oder von Tankgruppe zu Tankgruppe vor, unter Beachtung der genannten, kryotechnischen Erfordernisse. Falls ein gemeinsamer Tank oder eine gemeinsame Tankgruppe für alle Triebwerke vorhanden ist, kann der Transfer auch durch diesen/diese hindurch erfolgen. Unter einer Tankgruppe ist eine Mehrzahl zusammengehöriger Tanks zu verstehen, welche gleich oder unterschiedlich ausgeführt sein können, insbesondere hinsichtlich ihres Volumens.

Auch in den erfindungsgemäßen teilweise außerhalb der Tanks liegenden, Transferleitungen und Absperrventilen kann bei Inbetriebnahme eine Treibstoffverdampung auftreten. Die entstehenden Gasblasen werden jedoch im folgenden Tank abgeschieden bzw. kondensiert, so daß dieser auch die Aufgabe eines Gasabscheiders und Druckpuffers erfüllt. Auf diese Weise werden Treibstoffgase und Druck- bzw. Durchsatzschwankungen wirksam von den intakten Triebwerken ferngehalten.

Die Unteransprüche 2 bis 4 enthalten bevorzugte Ausgestaltungen des Treibstoffversorgungssystems nach Anspruch 1.

Die Erfindung wird anschließend anhand der Zeichnungen noch näher erläutert. Dabei zeigen in schematischer Darstellung:

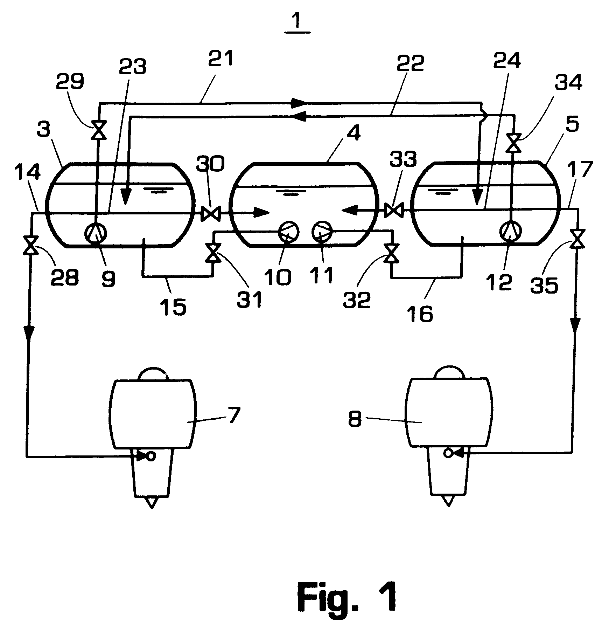

- Fig. 1: ein Treibstoffversorgungssystem mit drei Tanks für ein zweistrahliges Flugzeug,
- Fig. 2: den Treibstofffluß im normalen Flugbetrieb
- Fig. 3: den Treibstofffluß bei Ausfall eines Triebwerks.

Das Treibstoffversorgungssystem 1 ist für ein zweistrahliges Flugzeug, wie z.B. den Airbus A 310, vorgesehen und weist einen Tank 3 für das linke Triebwerk 7, einen Tank 5 für das rechte Triebwerk 8 und einen gemeinsamen Tank 4 für beide Triebwerke 7 und 8 auf. Das Ausfördern des Treibstoffes aus den Tanks erfolgt mit Hilfe der Tankpumpen 9, 10, 11 und 12. Die Zuleitung 14 aus Tank 3 wird bis zum linken Triebwerk 7 geführt, wobei diese mittels eines Absperrventils 28 freigegeben oder gesperrt werden kann. Ebenso verhält es sich mit der Zuleitung 17, welche bis zum rechten Triebwerk 8 verläuft und mittels des Absperrventils 35 freigegeben oder gesperrt wird. Erfindungsgemäß führen zwei Transferleitungen 15, 16 mit Absperrventilen 31, 32 aus dem mittleren Tank 4 in die seitlichen Tanks 3, 5.

Weiterhin führt vom linken Tank 3 eine Transferleitung 21 mit Absperrventil 29 zum rechten Tank 5, umgekehrt verläuft von diesem eine Transferleitung 22 mit Absperrventil 34 zum linken Tank 3. Weiterhin führen zwei Transferleitungen 23, 24 mit Absperrventilen 30, 33 von den äußeren Tanks 3, 5 in den mittleren Tank 4. Alle Transferleitungen sind an die für die Triebwerksversorgung erforderlichen Tankpumpen 9 bis 12 bzw. an die von den Pumpen ausgehenden Leitungen angeschlossen.

Wenn nun beispielsweise das linke Triebwerk 7 ausfällt, bzw. in dessen Zuleitungssystem ein Schaden (Leckage, Bruch, Verstopfung etc.) auftritt, wird das Absperrventil 28 geschlossen, so daß kein Treibstoff unnötig, d.h. ohne Schuberzeugung, verlorengeht. Mit Hilfe der Tankpumpe 9 kann der im Tank 3 vorhandene Treibstoff über die Transferleitung 21 direkt in den rechten Tank 5 und/oder über die Transferleitungen 23 und 16 durch den mittleren Tank 4 in den rechten Tank 5 umgepumpt werden, wofür die Absperrventile 29 bzw. 30 und 32 zu öffnen sind. Somit steht die gesamte Treibstoffmenge für das noch intakte Triebwerk 8 zur Verfügung.

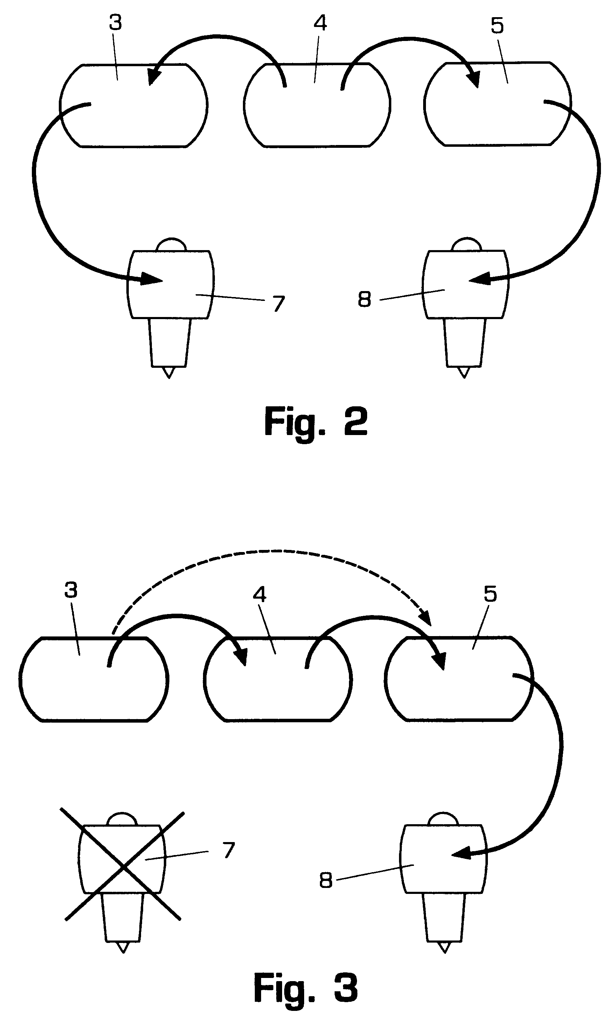

Dieser Fall ist in Figur 3 dargestellt, wobei die direkte Treibstoffübertragung in Form eines gestrichelten Pfeiles wiedergegeben ist.

Figur 2 zeigt demgegenüber den Treibstoffluß bei intakten Triebwerken und Leitungen.

Die Versorgung von Hilfstriebwerken wie der APU bleibt im vorliegenden Fall außer Betracht.

Es besteht auch die Möglichkeit, für den erfindungsgemäßen Treibstofftransfer zusätzlich zu den Tankpumpen separate Transferpumpen vorzusehen. Diese Lösung ist leicht verständlich und deshalb nicht gesondert dargestellt. Hierfür können beispielsweise Strahlpumpen nach dem Ejektorprinzip verwendet werden.

Im Gegensatz zum "crossover"-Prinzip mit direktem Treibstofftransfer Tank/Triebwerk liegt das Wesen der vorliegenden Erfindung also in dem ein- oder mehrfachen Treibstofftransfer von Tank zu Tank mit Gasabscheidung und Druckpufferung.

### Bezugszeichenliste

- 1: Treibstoffversorgungssystem
- 2: "
- 3: Tank
- 4: "
- 5: "
- 7: Triebwerk
- 8: "
- 9: Tankpumpe
- 10: "
- 11: "
- 12: "
- 14: Zuleitung
- 15: Transferleitung
- 16: Transferleitung
- 17: Zuleitung
- 21: Transferleitung
- 22: "
- 23: "
- 24: "
- 28: Absperrventil
- 29: "
- 30: "
- 31: "
- 32: "
- 33: "
- 34: "
- 35: "

## Patentansprüche

1. Treibstoffversorgungssystem für mehrstrahlige, kryogenen Treibstoff, insbesondere kryogenen Wasserstoff, benutzende Flugzeuge, mit einem Leitungssystem, einschließlich der erforderlichen Pumpen und Ventile, und mit einem Tank oder einer Tankgruppe für jedes Triebwerk oder für jeweils alle Triebwerke auf einer Seite der Flugzeuglängsmittelebene sowie ggf. mit einem zusätzlichen, gemeinsamen Tank oder einer zusätzlichen, gemeinsamen Tankgruppe für alle Triebwerke, **dadurch gekennzeichnet,** daß von jedem, einem bestimmten Triebwerk (7, 8) oder den Triebwerken einer Flugzeugseite zugeordneten Tank (3, 5) oder jeder, einem bestimmten Triebwerk oder den Triebwerken einer Flugzeugseite zugeordneten Tankgruppe mindestens eine Transferleitung (21 bis 24) mit Absperrventil (29, 30, 33, 34) zu mindestens einem weiteren, einem bestimmten Triebwerk (7, 8) oder den Triebwerken einer Flugzeugseite zugeordneten Tank (3, 5) oder mindestens einer weiteren, einem bestimmten Triebwerk oder den Triebwerken einer Flugzeugseite zugeordneten Tankgruppe und/oder ggf. zu dem allen Triebwerken (7, 8) gemeinsamen Tank (4) oder der allen Triebwerken gemeinsamen Tankgruppe führt, und daß ggf. von dem allen Triebwerken (7, 8) gemeinsamen Tank (4) oder der allen Triebwerken gemeinsamen Tankgruppe mindestens eine Transferleitung (15, 16) mit Absperrventil (31, 32) zu mindestens einem, einem bestimmten Triebwerk (7, 8) oder den Triebwerken einer Flugzeugseite zugeordneten Tank (3, 5) oder mindestens einer, einem oder mindestens einer, einem bestimmten Triebwerk oder den Triebwerken einer Flugzeugseite zugeordneten Tankgruppe führt.

2. Treibstoffversorgungssystem nach Anspruch 1, **dadurch gekennzeichnet,** daß die von den, einem bestimmten Triebwerk (7, 8) oder den Triebwerken einer Flugzeugseite zugeordneten Tanks (3, 5) oder Tankgruppen ausgehenden Transferleitungen (21 bis 24) stromabwärts der vorhandenen Tankpumpen (9, 12) noch innerhalb des jeweiligen Tanks (3, 5) von den Zuleitungen (14, 17) zu den Triebwerken (7, 8) abzweigen.

3. Treibstoffversorgungssystem nach Anspruch 1, **dadurch gekennzeichnet,** daß die Transferleitungen von zusätzlich zu den Tankpumpen installierten Transferpumpen ausgehen.

4. Treibstoffversorgungssystem nach Anspruch 1 oder 3, **dadurch gekennzeichnet,** daß die Einlaufbereiche mindestens eines Teils der Transferleitungen (15, 16, 21 bis 24) mit Strahlpumpen nach dem Ejektorprinzip verbunden sind.
